# EUROPÄISCHE PATENTSCHRIFT

(11) **EP 1 166 088 B1**
(45) Veröffentlichungstag und Bekanntmachung des Hinweises auf die Patenterteilung: **14.06.2006**
(21) Anmeldenummer: 00918554.7
(22) Anmeldetag: 07.04.2000
(51) Int. Cl.: G01N 21/35, G01N 21/39

(54) **VERFAHREN ZUR INFRAROT-OPTISCHEN BESTIMMUNG DER KONZENTRATION ZUMINDEST EINES ANALYTEN IN EINER FLÜSSIGEN PROBE**
METHOD OF IR-OPTICALLY DETERMINING THE CONCENTRATION OF AT LEAST ONE ANALYTE IN A LIQUID SAMPLE
PROCEDE POUR DETERMINER PAR OPTIQUE OPERANT DANS L'INFRAROUGE LA CONCENTRATION D'AU MOINS UN ANALYTE DANS UN ECHANTILLON LIQUIDE

(30) Priorität: 07.04.1999 AT 61699
(43) Veröffentlichungstag der Anmeldung: 02.01.2002
(73) Patentinhaber: Austria Wirtschaftsservice Gesellschaft mit beschränkter Haftung, 1030 Wien (AT); Lendl, Bernhard, 1160 Wien (AT)
(72) Erfinder: LENDL, Bernhard, A-1160 Wien (AT)
(74) Vertreter: Pawloy, Peter Michael
(86) Internationale Anmeldenummer: PCT/AT2000/000084
(87) Internationale Veröffentlichungsnummer: WO 2000/062040

(56) Entgegenhaltungen:
- EP-A- 0 636 876
- EP-A- 0 670 492
- EP-A- 0 706 043
- EP-A- 0 877 454
- WO-A-81/00622
- WO-A-99/07277
- DE-A- 19 503 931
- GB-A- 2 244 128
- JP-A- 10 260 135
- US-A- 5 268 910
- US-A- 5 533 509
- US-A- 5 746 942
- Dokumente, zitiert während der Mündl. Verhandlung am 28.11.2005

## Beschreibung

Die Erfindung betrifft ein Verfahren zur infrarot-optischen Bestimmung der Konzentration zumindest eines Analyten in einer flüssigen Probe, wobei die Infrarotabsorption des bzw. der Analyten bei zumindest zwei verschiedenen Wellenlängen gemessen und mit einem Standard verglichen wird, und die Infrarotstrahlung bei zumindest einen wellenlänge einer scharfen Intensitätspeak aufweist.

Die Erfindung betrifft weiters eine Vorrichtung zur infrarot-optischen Transmissionsbestimmung der Konzentration zumindest eines Analyten in einer flüssigen Probe, mit einer von der Probenflüssigkeit durchströmten Probenküvette, welche im Strahlungsweg zwischen einer Strahlungsquelle zur Bereitstellung der Infrarotstrahlung und einem Detektor zur Messung der vom Analyten in der Probenküvette hervorgerufenen Infrarotabsorption angeordnet ist.

Die Konzentrationsmessung bzw. Detektion von Stoffen in einer Probe wird in vielen wissenschaftlichen und technischen Gebieten, z.B. in der Chemie, Verfahrenstechnik, Fertigungstechnik, Medizintechnik, Umweltanalytik oder Lebensmittelanalytik mit Hilfe von Absorptionsspektren, insbesondere im infraroten Spektralbereich durchgeführt, da gerade in diesem Bereich viele Analyten charakteristische Absorptionsbanden aufweisen, aus deren Intensität die Analytkonzentration ermittelt werden kann.

Die GB 1 521 085 A offenbart einen Detektor für einen Infrarot-Analysator, welcher zur Bestimmung der Konzentration einer bestimmten Komponente in einer flüssigen oder gasförmigen Probe dient. Zwischen der Probenküvette und der Strahlungsquelle ist ein für Infrarotstrahlung eines einzigen schmalen Wellenlängenbereiches durchlässiges Filter angeordnet. Dabei wird ein Wellenlängenbereich gewählt, der von der zu analysierenden Substanz absorbiert wird. Durch die Differenz der Absorptionsspektren der Probe mit Analyt und der Probe ohne Analyt kann die Gegenwart sowie die Konzentration des Analyten in der Probe festgestellt werden. Dieser beschriebene Analysator erfordert jedoch eine komplizierte Vorrichtung und die gewonnenen Ergebnisse sind nicht spezifisch genug.

Die WO 92/17767 betrifft ein Verfahren zur quantitativen Bestimmung von Fett in einer Fettpartikel enthaltenden Emulsion unter Verwendung von IR-Absorptionstechniken, wobei der Absorptionspeak bei einer Wellenzahl von etwa 1160-1190 cm⁻¹ zur Bestimmung der Fettkonzentration herangezogen wird.

Eine weitere Vorrichtung zur Messung von Analyten in einer flüssigen Probe mit Hilfe der Messung von der Absorption von Infrarotstrahlen wird in der AT 404 514 B beschrieben. Hierbei wird der zu messende Analyt vor der Messung einer chemischen Reaktion unterworfen, welche die übrigen Bestandteile der flüssigen Probe unbeeinflusst lässt, und die durch die chemische Reaktion mit dem Analyten hervorgerufene Änderung der Infrarotabsorption wird als eindeutige Funktion der zu ermittelnden Konzentration des Analyten gemessen. Diese chemische Reaktion ist z.B. eine pH-Änderung, so dass der zu analysierende Stoff vor der pH-Änderung in einer bestimmten Form vorliegt, wie etwa einfach geladenes Substrat oder ungeladene Phosphorsäure, die bei der angegebenen Wellenlänge nicht oder nur geringfügig absorbiert. Nach der pH-Änderung liegt der Analyt in einer Form, z.B. dreifach geladenes Phosphat, vor, der bei der angegebenen Wellenlänge ein Absorptionsmaximum aufweist. Durch die Differenz der Messung vor und nach der chemischen Reaktion kann die Gegenwart und die Konzentration des Analyten bestimmt werden. Um Licht mit einer bestimmten Wellenlänge zu erzeugen, wird zwischen der Probenküvette und der Strahlungsquelle ein für Infrarotstrahlung eines einzigen schmalen Wellenlängenbereiches durchlässiges Filter angeordnet. Dieses an sich einfache und schnelle Verfahren mit der vorgeschalteten chemischen Reaktion weist jedoch Schwierigkeiten in Bezug auf die Empfindlichkeit und Robustheit des Analysators auf.

Es ist auch bekannt, dass durch Absorptionsmessung bei wenigen Wellenlängen im mittleren Infrarot-Spektralbereich eine selektive Konzentrationsbestimmung von Glucose in komplexen Mischungen, wie Humanserum, möglich ist. Dies konnte bereits von Heise et al. in Fresenius J. Anal. Chem. (1997), 359, 93-99 gezeigt werden. Dazu wurden Blutplasma und Vollblut als Proben eingesetzt, wobei die Absorptionsmessungen mittels eines FT-IR Spektrometers erfolgten und Spektren im gesamten mittleren Infrarot-Spektralbereich aufgenommen wurden. Im Rahmen der Untersuchungen von Heise et al. ergab sich, dass zur Erstellung eines chemometrischen Modells zur Glucosebestimmungen in unbekannten Proben bereits wenige Wellenlängen ausreichten, um gleiche, wenn nicht sogar bessere Ergebnisse zu erzielen als mittels eines PLS (partial least square)-Modells, das auf dem gesamten (1200 - 950 1/cm) Spektralbereich beruhte. Nachteilig an diesem Verfahren ist jedoch, dass das verwendete FT-IR-Spektrometer unhandlich und schwer ist und die verwendete Messung an der Oberfläche eines toxischen ZnSe-Kristalls für On-line-Bestimmungen biologischer Proben insofern unbrauchbar ist, als die Proben nach der Bestimmung aufgrund des Kontakts mit dem toxischen ZnSe-Kristall ebenfalls toxisch sind. Weiters treten potentielle Probleme mit der Absorption von Proteinen an der Oberfläche auf und nicht zuletzt sind Transmissionsmessungen in der Praxis faktisch nicht zu realisieren, da das lichtschwache FT-IR Spektrometer lediglich die Verwendung von Schichtdicken bis max. 50 Mikrometer erlaubt. Derartige Schichtdicken sind jedoch insbesondere bei der Konzentrationsbestimmung in biologischen Proben ungeeignet, da es innerhalb kurzer Zeit zu einer Verstopfung der schmalen Schicht bzw. zu einer Schädigung der Probe (z.B. Vollblut) kommt, wodurch eine On-line-Messung beispielsweise am lebenden Patienten mit Rückführung der Probe zum Patienten lebensgefährlich und daher völlig unmöglich wird.

US 5 533 509 betrifft ein Verfahren und eine Vorrichtung zur nicht-invasiven Messung des Blutzucker spiegels. Dabei wird ausgehand von einem Laser 11 ein Laserstrahl 13 durch einen Beam splitter 14 in zwei Teilstrahlen 13a und 13b aufgetrennt, wobei der Strahl 13a auf die Probe 17 auftrifft und die diffuse Reflexion des Teilstrahls mittels eines Detektors 21 gemessen wird. Gleichzeitig wird die Intensität des ursprünglichen Strahls 13 uber des optischen Weg 13b mittels eines zweiter Detektors 22 gemesser. Gemäß diesen Dokument wird zwingend in naher IR-Bereich gemesser

Die EP 0 670 492 A2 offenbart ein verfahren und eine Vorrichtung zur Messung ver Harn inhaltsstoffen, wobei lichtquellen mit varriablen wellenlängen, darunter auch laser bei Transmissions messung zum Einsalz kommen. Auch hier wird zwingend im nach IR-Bereich bzw. im sichtbaren Bereich gemessen.

Laut EP 0 636 876 A1 wird ein Verfahren und eine Vorrichtung beschrieben, wobei eine Einheit welche Laser mit variablen wellen länge erzeugt zur diffuse Reflexions-bzw. Transmissions messung verwendet wird. Die Messung erfolgt dabei in nahen IR-Bereich.

Es ist demnach ein Ziel der vorliegenden Erfindung, ein Verfahren sowie eine Vorrichtung zur infrarot-optischen Transmissionsbestimmung der Konzentration eines Analyten in einer flüssigen Probe zur Verfügung zu stellen, das einfach und schnell durchführbar ist, eine ausreichende Empfindlichkeit und Robustheit, um ein marktfähiges Produkt zu erzielen, aufweist und insbeson-dere für eine On-line Messung biologischer Proben auch am lebenden Patienten mit Rückführung der Probe zum Patienten geeignet ist.

Das Verfahren der eingangs angeführten Art ist dadurch gekennzeichnete dass die flüssige Probe mit Infrarotstrahlung hoher Lichtdichte im mittleren bis fernen Infrarotbereich durschstrahlt wird, und mittels zumindest eines durchstimmbar ausgebildeten Lasers erzeugt wird, dessen Wellenlänge während der Messung Kontrolliert verändert wird.

Herkömmliche Strahlungsquellen zur Erzeugung von Infrarotstrahlung basieren auf thermischen Strahlern und sind demgemäß in ihrer Strahlungsleistung beschränkt. So beträgt z.B. die von einem thermischen Strahler von 1500 K im schmalen Spektralbereich von 9,9 bis 10,1 cm⁻¹ emittierte Strahlungsleistung weniger als 0,2 % der gesamten emittierten Strahlungsleistung. Auf ' Grund der praktischen Schwierigkeiten bei der effizienten Sammlung der emittierten Strahlung ergibt sich weiters, dass nur ein kleiner Bruchteil der emittierten Strahlung tatsächlich für die Messung zur Verfügung steht. Im Falle eines "state of the art"-Spektrometers der Fa. Bruker beträgt die über den gesamten Spektralbereich verteilte und letztendlich in der Probenkammer verfügbare Strahlungsleistung nur rund 25 mW, was zur Folge hat, dass im schmalen Wellenlängenbereich von 9,9 bis 10,1 cm⁻¹ nur wenige (rund 50) *µ*W zur Verfügung stehen. Im Falle einer Ausbildung des thermischen Strahlers, wie in der AT 404.514 geoffenbart, kann abgeschätzt werden, dass die nutzbare Leistung ebenfalls nur im unteren (rund 100) *µ*W Bereich liegt.

Wenn hier und im Folgenden von "hoher Lichtdichte" gesprochen wird, bedeutet dies eine um Größenordnungen höhere spektrale Leistungsdichte als sie mit herkömmlichen thermischen Strahlern erreicht werden kann, insbesondere eine spektrale Leistungsdichte im Bereich von 10⁻⁵ W/cm⁻¹ und mehr, vorzugsweise im Bereich von 10⁻³ W/cm⁻¹ und mehr.

Derartige Infrarotstrahlung mit hoher Leistungsdichte wird mit Hilfe von Laser erzeugt, wobei auf Grund der hohen spektralen Dichte sowie der bzw. des scharfen Intensitätspeak(s) mit Lasern spektroskopische Verfahren möglich sind, die mit herkömmlichen Strahlungsquellen nicht durchführbar sind. Die Kombination der Spektroskopie mit der Laserspektroskopie ergibt ein Verfahren zur infrarot-optischen Transmissionsbestimmung von Analyten in einer flüssigen Probe, die eine bedeutend höhere Empfindlichkeit, Flexibilität und Robustheit als die herkömmlichen Verfahren aufweist.

Es können mit dem erfindungsgemäßen Verfahren beispielsweise Konzentrationen von Ionen sowie jeglicher anderer Stoffe, wie z.B. organische Säuren, insbesondere Fettsäuren, Alkohole, Kohlenhydrate, insbesondere Glucose, Proteine, Harnstoff etc., sehr genau gemessen werden.

In phosphathältigen Getränken wie Coca Cola light schwankt der pH zwischen 2,5 und 3. Daher liegt in solchen Lösungen sowohl H₂PO₄⁻ (meist mehr als 80 %) als auch H₃PO₄ vor. Zur direkten Bestimmung der Gesamtmenge an Phosphorsäure ist somit die Erfassung beider Moleküle notwendig. Dies gelingt durch Messung der Infrarotabsorption an mehreren scharfen Spektralbereichen, vorzugsweise bei 1103 cm⁻¹, 1078 cm⁻¹, 1058 cm⁻¹ (H₂PO₄⁻), 1014 cm⁻¹ und 975 cm⁻¹ (H₃PO₄). Ziel der Auswahl der scharfen Wellenlängenbereiche ist es, die Absorptionsmaxima von H₂PO₄⁻ (1078 cm⁻¹) sowie H₃PO₄ (1014 cm⁻¹) relativ zu Basislinienpunkten (1103 cm⁻¹, 1058 cm⁻¹ und 975 cm⁻¹) zu messen, sodass die Bestimmung der Gesamtmenge an Phosphorsäure nicht durch weitere Komponenten wie Natriumcyclamat (Absorptionsmaximum bei 1038 cm⁻1) sowie Zuckercoleur (Absorptionsmaximum bei 1042 cm⁻¹) oder auch schwankender Wasserabsorption durch pH-Änderung gestört wird.

Vorzugsweise wird der zu messende Analyt zusätzlich vor oder während der Messung einer Modulation unterworfen, wobei die durch die Modulation des Analyten hervorgerufene Änderung der Infrarotabsorption als Funktion der zu ermittelnden Konzentration des Analyten gemessen wird.

Unter "Modulation" wird jegliche Änderung der Absorption der Probe bzw. des Analyten verstanden, so etwa eine chemische Reaktion oder eine Auftrennung der Probe, etwa mittels eines chromatographischen Verfahrens. Eine chemische Reaktion ist z.B. eine Änderung des pH-Werts der flüssigen Probe, so dass der Analyt nach der chemischen Reaktion in einer anderen Form vorliegt, in der er ein charakteristisches Absorptionsspektrum aufweist. Zum Beispiel wird bei der Konzentrationsbestimmung von Phosphat, das im sauren Bereich praktisch ausschließlich in den Formen H₂PO₄⁻ und H₃PO₄ (einfach geladenes Phosphat oder ungeladene Phosphorsäure) vorliegt, vom sauren pH auf einen pH-Wert auf über 13 erhöht, so dass Phosphat praktisch ausschließlich in der dreifach geladenen Form vorliegt oder auf pH 9 bis 11, so dass das Phosphat praktisch ausschließlich in der zweifach geladenen Form vorliegt. In der dreifach geladenen Form weist Phosphat ein Absorptionsmaximum bei einer Wellenzahl von 1005 cm⁻¹ und in der zweifach geladenen Form weist das Phosphat ein Absorptionsmaximum von 1080 cm⁻¹ auf.

Unter "Modulation" wird weiters z.B. eine Chelatierung verstanden, wobei der Analyt mit einem zugesetzten Reagens ein Chelat bildet, dessen Absorption der Infrarotstrahlung gemessen wird, so dass die Konzentration des Analyten präzise bestimmt werden kann. Als Komplexbildungsreaktion kommt etwa EDTA (Ethylendiamintetraessigsäure)-Ca²⁺-Komplexierung oder Glucose-Borax-Komplexierung in Frage, um nur zwei Beispiele zu nennen. Der Vorteil der zuletzt genannten Komplexierung besteht darin, dass in einer Probe, die neben Zucker auch Alkohole aufweist, auch niedrige Zuckergehalte in Gegenwart hoher Alkoholkonzentrationen durch Komplexierung präzise gemessen werden können, wohingegen bei einer direkten, einfachen infrarot-optischen Bestimmung der Probe die Zucker und Alkohole nicht nebeneinander bestimmbar sind, da sich die Absorptionsspektren überlagern.

Für weitere Möglichkeiten der Technik der Modulation wird auf die Schrift von J. Ruzicka "The second coming of flow-injection analysis" (Analytica Chemica Acta, 261 (1992) 3-10) verwiesen.

Unter "Modulation" wird auch die Auftrennung der Probe, etwa mittels eines chromatographischen Verfahrens auf einer Chromatographiesäule verstanden. Dabei wird die flüssige Probe umfassend den bzw. die Analyten chromatographisch aufgetrennt, wonach die aufgetrennte Probe bei Verlassen der Säule mit Infrarotstrahlung hoher Lichtdichte durchstrahlt wird, welche Infrarotstrahlung zumindest einen scharfen Intensitätspeak aufweist. Jeder Analyt absorbiert Strahlung einer definierten Wellenlänge, so dass die Absorption dieses bestimmten Peaks auch bei unvollständiger Auftrennung quantifiziert werden kann.

Weiters wird unter "Modulation" auch eine Wechselwirkung zwischen einer biologischen Probe (z.B. Proteinlösung, DNA-Lösung, Zellkulturen, etc.) und einem bestimmten Arzneimittelwirkstoff verstanden, wobei eine etwaige Wechselwirkung zwischen der biologischen Probe und dem Wirkstoff zwangsläufig mit einer Konzentrationsänderung an freiem Wirkstoff bzw. einer Änderung des Absorptionsspektrums der biologischen Probe verbunden ist.

Es können mit der obigen Ausführungsform des erfindungsgemäßen Verfahrens natürlich ebenfalls weitere Ionen sowie jegliche andere Stoffe, wie z.B. organische Säuren, Alkohole, Kohlenhydrate, etc., sehr genau gemessen werden. Die Änderung des pH-Werts wird z.B. durch Zusatz einer Lauge bzw. Säure sowie auch mit einem Ionentauscher durchgeführt. Für weitere Ausführungsformen dieses Verfahrens der infrarot-optischen Bestimmung mit Hilfe einer chemischen Reaktion ist auf die Patentschrift AT 404 514 B zu verweisen.

Bei Verwendung von zwei oder mehreren Infrarotstrahlungsquellen verschiedener Wellenlängen können bei Chromatographieverfahren auch unvollständig aufgetrennte Peaks den jeweiligen Analyten präzise zugeordnet werden, da zwei oder mehrere Spuren ("traces") bei verschiedenen Wellenlängen aufgenommen werden und durch Vergleich der Spuren eventuelle Unklarheiten bei der Zuordnung der jeweiligen Peaks ausgeräumt werden (so können verschiedene Analyten in einer Spur ("trace") absorbieren, in den anderen jedoch nicht und umgekehrt, vgl. auch Journal of Chromatography, A 824 (1998) 159-167).

Die Infrarotstrahlung wird mittels zumindest eines Lasers erzeugt. Auf diese Weise kann maximale Lichtdichte und beste Auflösung erzielt werden. Die Einstellungen des Lasers hängen vom gewünschten Wellenlängenbereich ab.

Laser zur Herstellung von Infrarotstrahlung sind z.B. Diodenlaser, Farbstofflaser, Farbzentrenlaser, um nur einige Beispiele zu nennen. Für das erfindungsgemäße Verfahren ist es wichtig, dass die Laser praktisch monochromatisches Licht erzeugen. Auf diese Weise ist sichergestellt, dass ein Spektrum im gewünschten Wellenlängenbereich erhalten wird, das mindestens einen scharfen Peak bzw. mehrere scharfe Peaks bei eng beieinander liegenden Wellenlängen aufweist. Ist in der Probe ein Analyt vorhanden, der bei einer ganz bestimmten Wellenlänge Strahlung absorbiert, so wird die Konzentration dieses Stoffes selbst in geringsten Konzentrationen eindeutig detektiert.

Weiters ist es von Vorteil, dass Laser im Gegensatz zu thermischen Strahlern effektiv gepulst betrieben werden können, wodurch sich eine höhere Modulationstiefe ergibt.

Bei Diodenlasern wird durch eine p-n Halbleiterdiode in Transmissionsrichtung ein Strom geschickt, so dass Elektronen und Löcher im Bereich des p-n Übergangs rekombinieren. Die Endflächen der Diode wirken hierbei meist als resonanter Spiegel. Diodenlaser haben keine fest vorgegebene Wellenlänge.

Farbzentrenlaser sind Festkörperlaser, bei welchen als aktives Medium ein Kristall mit Farbzentren verwendet wird. Mit verschiedenen Kristallen überdecken sie den gesamten Bereich des nahen infraroten Wellenbereichs von 0,8 bis 4 *µ*m.

Farbstofflaser sind Laser, deren aktives Medium aus in Flüssigkeiten gelösten organischen Farbstoffen besteht. Die Farbstoffe besitzen breite Emissionsbanden.

Ein weiteres günstiges Verfahren ist dadurch gegeben, dass sich bei Verwendung von mehreren Lasern die Mittelwerte der jeweiligen Intensitätspeaks der Infrarotstrahlung voneinander jeweils um eine Wellenzahl von etwa 50 unterscheiden. Die zur Zeit hergestellten Laser erzeugen eine Strahlung, die in einem Wellenzahl-Bereich von etwa 40 bis 50 durchstimmbar sind. Werden nun zwei Laser eingesetzt, die Strahlungen erzeugen, deren Wellenlängen sich um eine Wellenzahl von 50 unterscheiden, wird durch diese beiden Laser ein Wellenzahl-Bereich von etwa 100 abgedeckt. Je mehr Laser eingesetzt werden, umso größer wird der Wellenzahl-Bereich, der dadurch abgedeckt werden kann.

Besonders bevorzugt wird ein Verfahren zur Verfügung gestellt, wobei sich bei Vorsehen mehrerer scharfer Intensitätspeaks in einem Emissionsspektrum eines Lasers diese jeweils um eine Wellenzahl von etwa 1 (0,01 Mikrometer) unterscheiden. Dieser Unterschied erlaubt eine hochspezifische Bestimmung selbst von geringen Mengen eines Analyten, da die Absorption einer einzigen Absorptionsbande präzise detektiert und quantifiziert werden kann. Solche Emissionsspektren sind nur mit Hilfe von Lasern herstellbar. Mit Hilfe der konventionellen Infrarotlichtquellen (thermische Strahler + Filter) waren lediglich Wellenlängenbereiche mit einer Breite von rund 20 Wellenzahlen produzierbar, die sich um eine Wellenzahl von etwa 20 bis 50 cm⁻¹ unterscheiden.

Günstig ist auch, wenn die Infrarotstrahlung mittels mehrerer Laser erzeugt wird. Jeder Laser besitzt ein spezifisches Emissionsspektrum und somit wird es möglich, jeglichen gewünschten Wellenlängenbereich abzudecken. Je nachdem, welche Wellenlänge(n) von den zu bestimmenden Analyten absorbiert wird (werden), werden die Laser ausgewählt bzw. angesteuert.

Vorzugsweise wird ein Verfahren eingesetzt, wobei der bzw. die Laser als Quantum-Kaskaden-Laser ausgebildet ist bzw. sind. Ein Quantum-Kaskaden-Laser ist ein Halbleiterlaser, der nur eine Art von Träger verwendet, und der auf dem Prinzip der Quantumbegrenzung basiert. In einem Quantum-Kaskaden-Laser vollbringen die Elektronen Übergänge zwischen begrenzten Zuständen in ultra-dünnen alternierenden Schichten eines Halbleitermaterials. Die Emissionswellenlänge hängt nunmehr von der Dicke der Schichten ab, so dass ein weites Spektrum von mittleren Infrarotwellenlängen sowie auch weit in den fernen Infrarotbereich erzeugt werden kann, zurzeit insbesondere zwischen 3,5 und 17 *µ*m. Ein besonderer Vorteil eines Quantum-Kaskaden-Lasers besteht darin, dass höhere Betriebstemperaturen möglich sind. Der Nachteil fast aller Diodenlaser ist die große Stromdichte, die erreicht wird, die ohne Kühlung zu einer thermischen Zerstörung führen würde. Die Effizienz der Kühlung dieser Zone begrenzt den Entladungsstrom und damit die Lichtleistung des Diodenlasers. Hingegen können Quantum-Kaskaden-Laser bei und über Raumtemperatur eingesetzt werden, was bislang noch nicht möglich war. Da der Quantum-Kaskaden-Laser auf einer Kaskade von identischen Zuständen (typischerweise 20 bis 50) basiert, emittiert ein Elektron viele Photonen, so dass eine höhere optische Leistung emittiert wird. Ein weiterer Vorteil des Quantum-Kaskaden-Lasers besteht darin, dass er robuster ist. Auf Grund all dieser Vorteile ist das erfindungsgemäße Verfahren zur infrarot-optischen Bestimmung der Konzentration zumindest eines Analyten in einer flüssigen Probe, wobei die Infrarotstrahlung mittels eines Quantum-Kaskaden-Lasers erzeugt wird, spezifisch, rasch durchführbar und somit optimal für den industriellen Einsatz.

Dere bzw. die erfindungsgemäß eingesetzten Laser ist bzw. sind durchstimmbar ausgebildet d.h., dass die Wellenlänge des Lasers kontrolliert verändert werden kann. Wird ein durchstimmbarer Laser zur infrarot-optischen Bestimmung eingesetzt, so wird das Verfahren wesentlich flexibler. Dadurch wird ermöglicht, dass ein einziges Gerät für die Bestimmung aller möglichen Analyten, Komplexe, Moleküle etc. eingesetzt und an die unterschiedlichsten chemischen Probleme angepasst werden kann. Bei Diodenlaser ist die Wellenlänge in einem Bereich, der durch das verwendete Halbleitermaterial gegeben ist, durchstimmbar, was durch Veränderung der Temperatur und/oder des Entladungsstromes erfolgt. Durchstimmbare Diodenlaser liefern Licht im nahen, mittleren und fernen Infrarot zwischen 0,8 und 32 µm.

Die Vorrichtung der eingangs angeführten Art ist dadurch gekennzeichnet, das als Strahlungsquelle für die Infrarotstrahlung zumindest ein durchstimmbarer Laser vorgesehen ist, der Strahlung hoher Lichtdichte im mittleren bis fernen Infrarotbereich erzeugt, welche Infrarotstrahlung bei zumindest einer Wellenlänge einen scharfen Intensitätspeak aufweist. Die Vorrichtung kann so konstruiert sein, dass eine On-line-Messung beispielsweise am lebenden Patienten mit Rückführung der Probe zum Patienten möglich ist. Somit wird eine Vorrichtung zur Verfügung gestellt, die einen einfachen Aufbau aufweist und eine rasche und spezifische Bestimmung der Analyten ermöglicht.

Vorzugsweise ist in der erfindungsgemäßen Vorrichtung weiters der Probenküvette eine Modulationsvorrichtung vorgeschaltet bzw. beinhaltet die Probenküvette eine Modulationsvorrichtung, in welcher der Analyt in einer sein Absorptionsverhalten ändernden Weise beeinflussbar ist.

Eine besonders bevorzugte Vorrichtung ist dadurch gekennzeichnet, dass zumindest ein Laser als Quantum-Kaskaden-Laser ausgebildet ist, der Infrarotstrahlung mit mindestens einem scharfen Intensitätspeak erzeugt. Wie oben bereits beschrieben, ist dadurch eine äußerst präzise Bestimmung von Analyten möglich.

Eine weitere vorteilhafte Ausführungsform ist dadurch gegeben, dass der zumindest eine Quantum-Kaskaden-Laser Infrarotstrahlung erzeugt, deren Intensitätspeaks sich um eine Wellenzahl von etwa 1 (0,01 Mikrometer) unterscheiden. Mit Hilfe dieser Vorrichtung wird die präzise Messung des Analyten möglich, da eine hohe Lichtintensität im Bereich der Infrarotabsorptionsbande des Analyten erzielt wird.

Vorzugsweise ist eine Vorrichtung dadurch gekennzeichnet, dass bei Verwendung mehrerer Laser sich die Mittelwerte der jeweiligen Intensitätspeaks der Infrarotstrahlung voneinander jeweils um eine Wellenzahl von etwa 50 unterscheiden.

Die vorliegende Erfindung wird anhand der in den Zeichnungen dargestellten Figuren weiter erläutert, auf die sie jedoch nicht beschränkt sein soll, wobei.
Fig.1 schematisch eine Vorrichtung darstellt, wobei die vorgeschaltene Modulation eine pH-Erhöhung der Probe ist;
Fig. 2a das Absorptionsspektrum von PO₄³⁻ und H₂PO₄⁻;
Fig. 2b das Emissionsspektrum eines Quantum-Kaskaden-Lasers;
Fig. 3 das zu Fig. 2a korrespondierende Spannung-Zeit-Diagramm;
Fig. 4 das Absorptionsspektrum von EDTA und EDTA+Ca²⁺;
Fig. 5 das Absorptionsspektrum von reiner Glucose und von Glucose im Glucose-Borax-Komplex; und
Fig. 6 Emissionsspektren von zwei Quantum-Kaskaden-Lasern
darstellen.

Die Fig. 7, 8 und 9 zeigen Absorptionsspektren, wie sie bei der erfindungsgemäßen Bestimmung freier Fettsäuren erhalten werden.

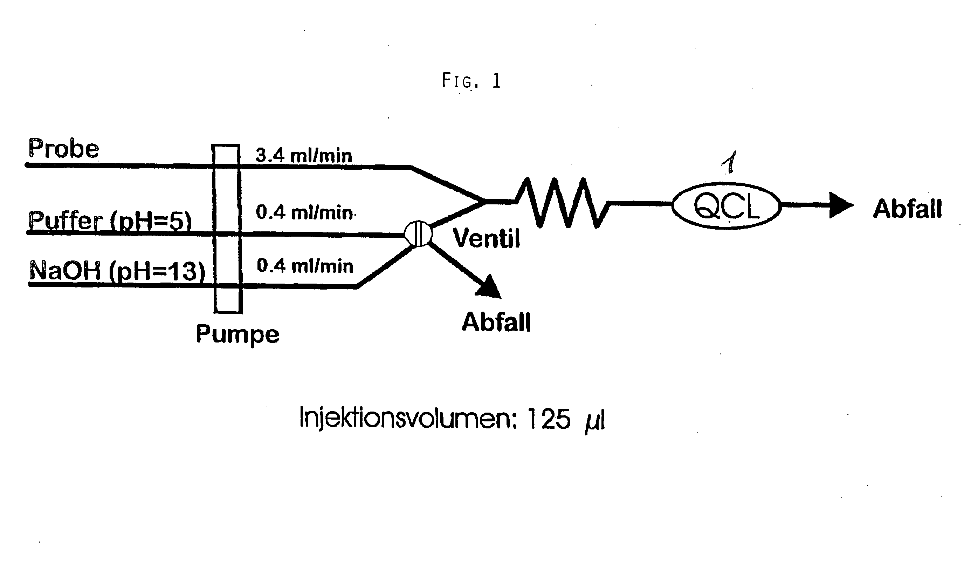

In Fig. 1 ist eine Vorrichtung zur infrarot-optischen Bestimmung eines Analyten in einer flüssigen Probe mit Hilfe eines Quantum-Kaskaden-Lasers (1) dargestellt. Der Detektion ist hier eine Modulation des Analyten, Phosphat, vorgeschaltet, nämlich eine pH-Änderung. Die Probe wird dem Detektor QCL mit 3,4 ml/min zugeführt. Vor dem Detektor wird der Probe entweder ein Puffer mit einem pH-Wert von 5 zugesetzt oder eine Natronlauge mit einem pH-Wert von 13, je nachdem in welcher Stellung sich das Ventil befindet.

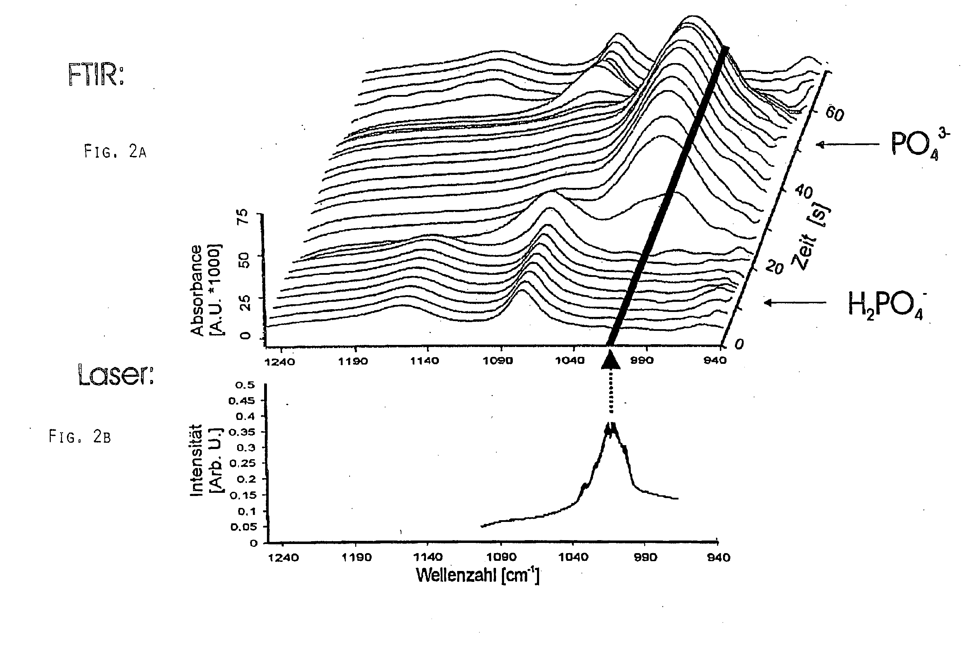

In Fig. 2a ist ersichtlich, dass sich das Absorptionsspektrum entsprechend der Änderung des pH-Werts ändert. Der schwarze Balken kennzeichnet die Intensitätspeaks, die der verwendete Quantum-Kaskaden-Laser (1) erzeugt (s. auch die darunterliegende Fig. 2b). Bis zu etwa 20 sek (pH=5) liegt der Analyt als H₂PO₄⁻ vor. In der Zeit von 30 sek bis etwa 60 sek liegt der Analyt als PO₄³⁻ vor (pH=13). Bei einem pH-Wert von 5 wird die Strahlung weniger absorbiert, bei einem pH-Wert von 13 wird deutlich mehr Strahlung absorbiert, so dass in diesem Bereich ein Peak entsteht. Anschließend (nach 60 sek) wird der pH wieder auf pH=5 gesenkt, so dass der Analyt die Strahlung weniger absorbiert.

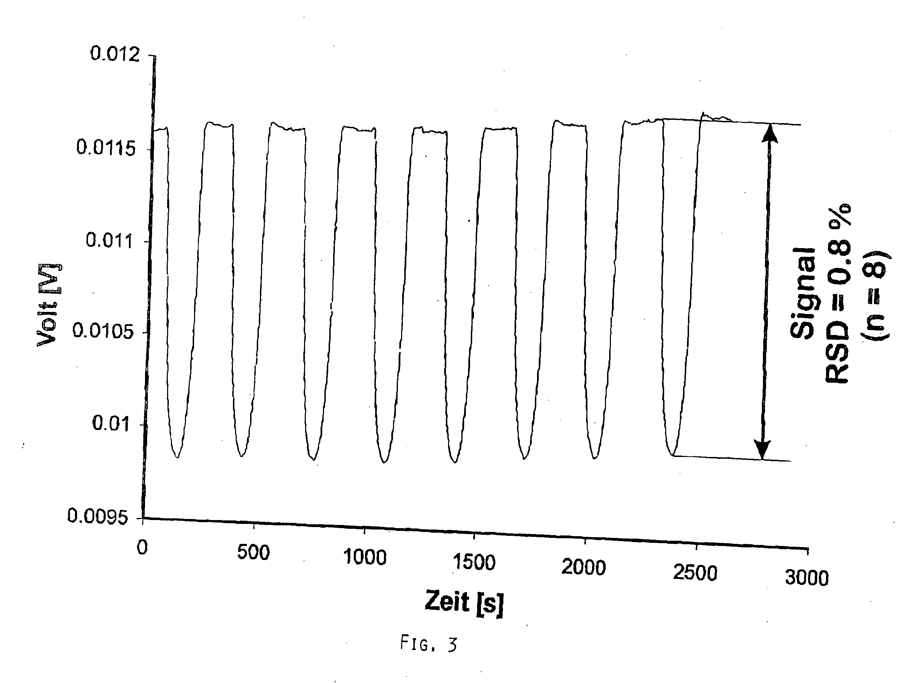

In Fig. 3 ist das zu Fig. 2a korrespondierende Spannungs-Zeit-Diagramm gezeigt. Wird weniger Strahlung absorbiert (pH=5), so wird eine maximale Spannung von über 0.0115 V gemessen. Wird der pH-Wert auf 13 erhöht, so dass der Analyt die Strahlung stärker absorbiert, so sinkt die gemessene Spannung auf ein Minimum von unter 0.01 V. Mit der Zeit wurde der pH-Wert geändert, so dass die in Fig. 3 ersichtliche Zick-Zack-Kurve entsteht.

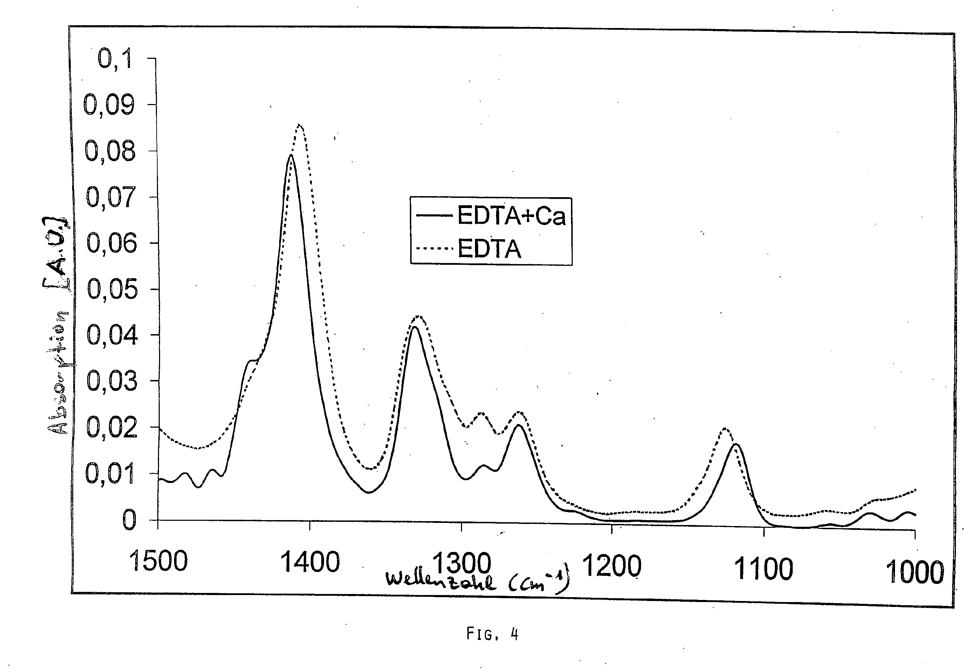

In Fig. 4 sind zwei Infrarot-Absorptionsspektren dargestellt. Vor der Absorptionsmessung kann eine Chelatierung vorgeschaltet werden (das Absorptionsspektrum sowohl des Chelats EDTA-Ca²⁺ als auch des EDTA ohne Ca²⁺ ist dargestellt). Die Unterschiede der Peakhöhen könnten mit Hilfe des Quantum-Kaskaden-Lasers (1) präzise festgestellt werden.

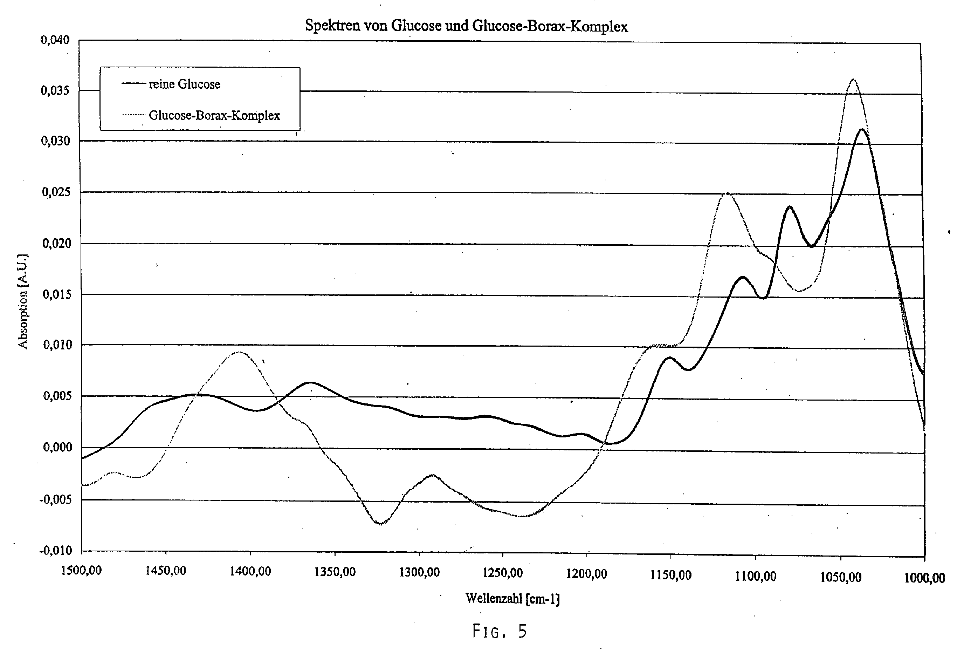

Fig. 5 zeigt ebenfalls zwei Absorptionsspektren, wobei die der Detektion vorgeschaltene Modulation eine Komplexierung von Glucose mit Borax ist. Das Spektrum der reinen Glucose weist andere Peakintensitäten auf als das Spektrum der Glucose im Glucose-Borax-Komplex, was bei Verwendung eines Quantum-Kaskaden-Lasers (1) präziser messbar ist.

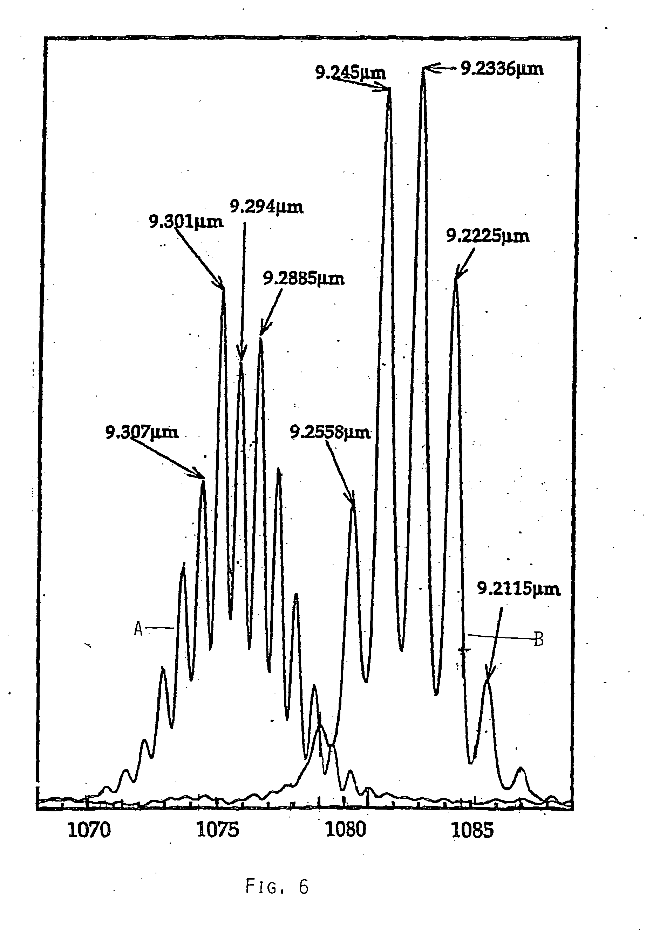

Fig. 6 stellt zwei Emissionsspektren dar, die von verschiedenen Quantum-Kaskaden-Lasern A, B erzeugt wurden. Es ist ersichtlich, dass die Wellenlängen jeweils scharfe Intensitätspeaks aufweisen, wobei sich die Wellenlängen um eine Wellenzahl von etwa 1 (0,01 *µ*m) unterscheiden. (Bei Verwendung eines Quantum-Kaskaden-Lasers sind die Peaks klar ersichtlich, und die Messung wird empfindlich) .

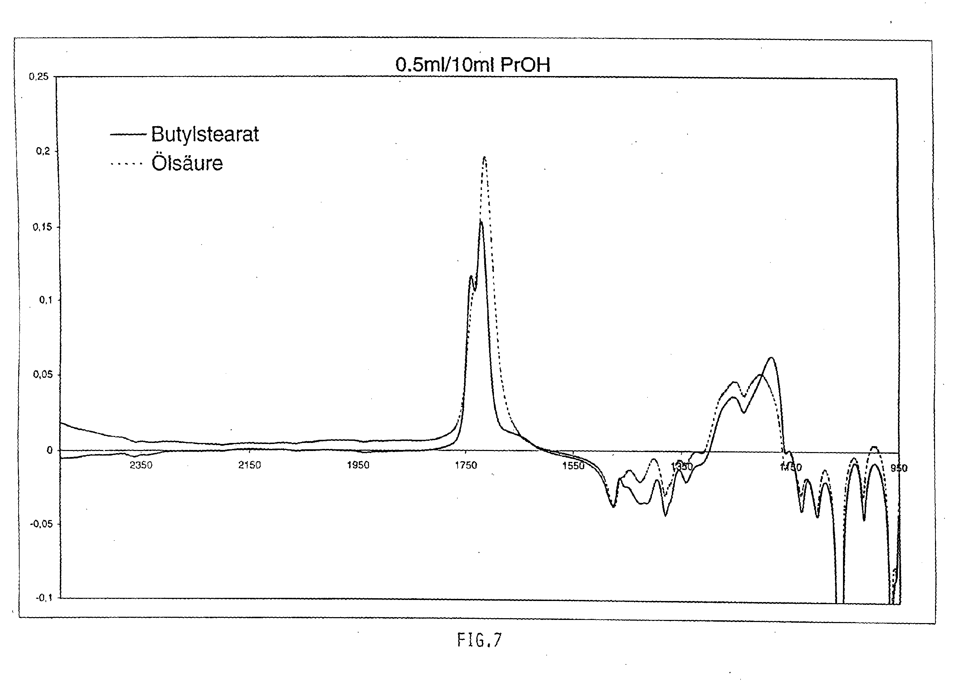

Fig. 7 zeigt die Absorptionsspektren von einem Fettsäureester (Butylstearat) und einer freien Fettsäure (Ölsäure) in n-Propanol. Man erkennt deutlich, dass die Bande der -C=O-Streckschwingung der beiden Moleküle überlappen. Zur präziseren Bestimmung der freien Fettsäure in Speiseölen, welche hauptsächlich aus Fettsäureester und Nebenbestandteilen, wie weiteren C=O-hältigen Verbindungen, z.B. Aldehyde und Ketone, bestehen, ist es deshalb notwendig, das Absorptionsspektrum der freien Fettsäuren selektiv zu modulieren.

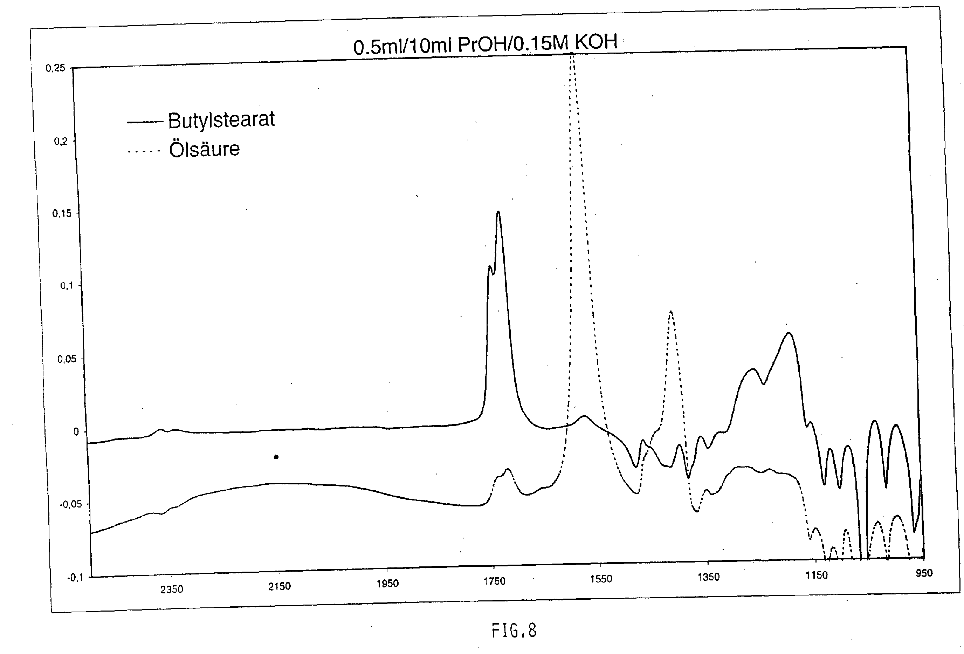

Fig. 8 zeigt, dass durch Zugabe von KOH/n-Propanol das Spektrum des Fettsäureesters praktisch unverändert bleibt, während das Spektrum der freien Fettsäuren sich deutlich verändert - man erkennt die asymmetrische Streckschwingung des gebildeten Carboxylations bei 1570 und die symmetrische Streckschwingung bei 1400 Wellenzahlen. Durch Messung der Infrarotabsorption des modulierten Fettsäureester-Spektrums, vorzugsweise bei 1570 Wellenzahlen alleine bzw. relativ zur Absorption bei 1612 Wellenzahlen mit Hilfe eines Quantum-Kaskaden-Lasers gelingt die präzise Messung des Gehalts an freien Fettsäuren in Speiseölen.

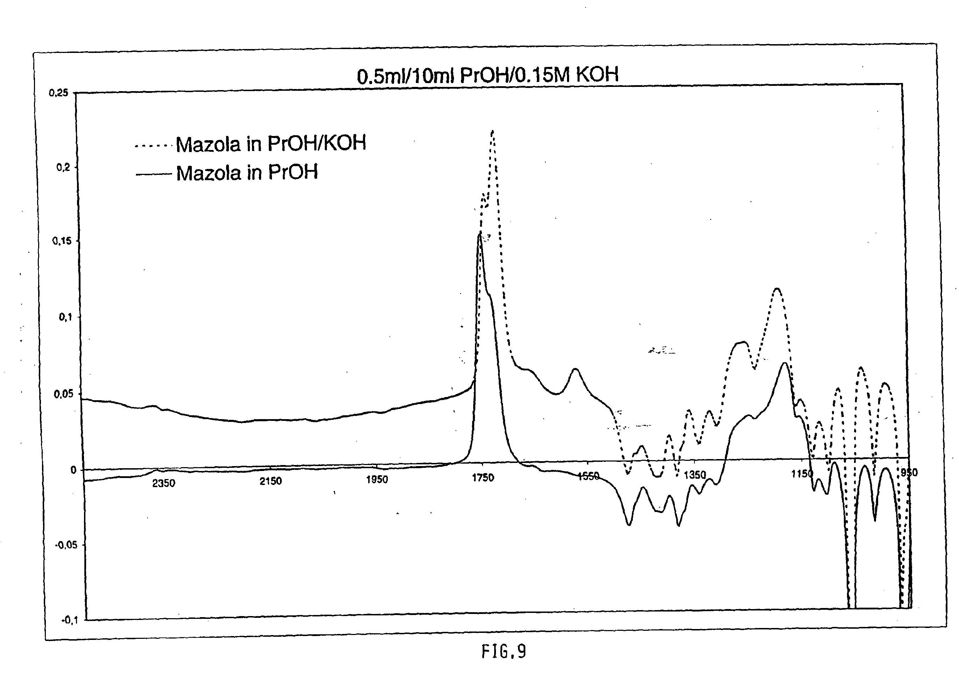

In Fig. 9 wird ein Beispiel aus der PraXis gezeigt; hier wurde der Gehalt an freien Fettsäuren in einem handelsüblichen Speiseöl (Mazola) bestimmt.

## Patentansprüche

1. Verfahren zur infrarot-optischen Bestimmung der Konzentration zumindest eines Analyten in einer flüssigen Probe, wobei die Infrarotabsorption des bzw. der Analyten bei zumindest zwei verschiedenen Wellenlängen gemessen und mit einem Standard verglichen wird und die Infrarotstrahlung bei zumindest einer Wellenlänge einen scharfen Intensitätspeak aufweist **dadurch gekennzeichnet, dass** die flüssige Probe mit Infrarotstrahlung hoher Lichtdichte im mittleren bis fernen Infrarotbereich durchstrahlt wird, und mittels zumindest eines durchstimmbar ausgebildeten Lasers erzeugt wird, dessen Wellenlänge während der Messuna kontrolliert verändert wird.

2. Verfahren nach Anspruch 1, **dadurch gekennzeichnet, dass** der zu messende Analyt vor oder während der Messung einer Modulation unterworfen wird, wobei die durch die Modulation des Analyten hervorgerufene Änderung der Infrarotabsorption als Funktion der zu ermittelnden Konzentration des Analyten gemessen wird.

3. Verfahren nach einem der Ansprüche 1 oder 2, **dadurch gekennzeichnet, dass** bei Verwendung mehrerer Laser sich die Mittelwerte der jeweiligen Intensitätspeaks der Infrarotstrahlung voneinander jeweils um eine Wellenzahl von etwa 50 unterscheiden.

4. Verfahren nach Anspruch 3, **dadurch gekennzeichnet, dass** sich bei Vorsehen mehrerer scharfer Intensitätspeaks in einem Emissionsspektrum eines Lasers diese sich jeweils um eine Wellenzahl von etwa, 1 bzw. 0,01 Mikrometer, unterscheiden.

5. Verfahren nach Anspruch 4, **dadurch gekennzeichnet, dass** der bzw. die Laser als Ouantum-Kaskaden-Laser ausgebildet ist bzw. sind.

6. Vorrichtung zur infrarot-optischen Transmissionsbestimmung der Konzentration zumindest eines Analyten in einer flüssigen Probe, mit einer von der Probeflüssigkeit durchströmten Probenküvette, welche im Strahlungsweg zwischen einer Strahlungsquelle zur Bereitstellung der Infrarotstrahlung und einem Detektor zur Messung der vom Analyten in der Probenküvette hervorgerufenen Infrarotabsorption angeordnet ist, **dadurch gekennzeichnet, dass** als Strahlungsquelle für die Infrarotstrahlung zumindest ein durchstimmbarer Laser vorgesehen ist, der Strahlung hoher Lichtdichte im mittleren bis fernen Infrarotbereich erzeugt, welche Infrarotstrahlung bei zumindest einer Wellenlänge einen scharfen Intensitätspeak aufweist.

7. Vorrichtung nach Anspruch 6, **dadurch gekennzeichnet, dass** der Probenküvette weiters eine Modulationsvorrichtung vorgeschaltet ist bzw. die Probenküvette eine Modulationsvorrichtung beinhaltet, in welcher der Analyt in einer sein Absorptionsverhalten ändernden Weise beeinflussbar ist.

8. Vorrichtung nach Anspruch 6 oder 7, **dadurch gekennzeichnet, dass** zumindest einer der Laser als Quantum-Kaskaden-Laser ausgebildet ist, der Infrarotstrahlung mit zumindest einem scharfen Intensitätspeak erzeugt.

9. Vorrichtung nach Anspruch 8, **dadurch gekennzeichnet, dass** der zumindest eine Quantum-Kaskaden-Laser Infrarotstrahlung erzeugt, deren Intensitätspeaks sich um eine Wellenzahl von etwa 1, bzw. 0,01 Mikrometer, unterscheiden.

10. Vorrichtung nach einem der Ansprüche 6 bis 9, **dadurch gekennzeichnet, dass** bei Verwendung mehrerer Laser sich die Mittelwerte der jeweiligen Intensitätspeaks der Infrarotstrahlung voneinander jeweils um eine Wellenzahl von etwa 50 unterscheiden.

## Claims

1. A method of infrared-optically determining the concentration of at least one analyte in a liquid sample, wherein the infrared absorption of the analyte(s) is measured at at least two different wave lengths and compared with a standard and the infrared radiation has a sharp intensity peak at at least one wave length, **characterized in that** the liquid sample is irradiated with an infrared radiation of high light density in the middle to far infrared range, which radiation is produced by at least one laser designed to be tunable, the wave length of said laser being controlledly changed during said measurement.

2. A method according to claim 1, **characterised in that** the analyte to be measured is subjected to a modulation prior to or during the measurement, wherein the change of the infrared absorption induced by the modulation of the analyte is measured as a function of the analyte concentration to be measured.

3. A method according to any one of claims 1 or 2, **characterized in that** when using several lasers, the mean values of the respective intensity peaks of the infrared radiation differ from each other by a wave number of approximately 50.

4. A method according to claim 3, **characterized in that** with several sharp intensity peaks being provided in one emission spectrum of a laser, these intensity peaks in each case differ by a wave number of approximately 1 micrometer, or 0.01, micrometer, respectively.

5. A method according to claim 4, **characterized in that** the laser(s) is (are) designed as quantum cascade laser.

6. An arrangement for the infrared-optical transmission determination of the concentration of at least one analyte in a liquid sample, with a sample cuvette flowed through by the sample liquid, the sample cuvette being arranged in the radiation path between a radiation source for providing the infrared radiation and a detector for measuring the infrared absorption induced by the analyte in the sample cuvette, **characterized in that** at least one tunable laser is provided as the radiation source for the infrared radiation, which laser produces a radiation of high light density in the middle to far infrared range, which infrared radiation has a sharp intensity peak at at least one wavelength.

7. An arrangement according to claim 6, **characterized in that** the sample cuvette furthermore is preceded by a modulation device, or the sample cuvette includes a modulation device, respectively, in which the analyte can be influenced in a manner changing its absorption behavior.

8. An arrangement according to claim 6 or 7, **characterized in that** at least one of the lasers is designed as a quantum cascade laser producing infrared radiation with at least one sharp intensity peak.

9. An arrangement according to claim 8, **characterized in that** the at least one quantum cascade laser produces infrared radiation whose intensity peaks differ by a wave number of approximately 1 micrometer, or 0.01 micrometer, respectively.

10. An arrangement according to any one of claims 6 to 9, **characterized in that** when several lasers are used, the mean values of the respective intensity peaks of the infrared radiation differ from each other by a wave number of approximately 50.

## Revendications

1. Procédé de détermination optique infrarouge de la concentration d'au moins un analyte dans un échantillon liquide, dans lequel on mesure l'absorption dans l'infrarouge du ou des analytes à au moins deux longueurs d'onde différentes et on la compare avec une référence, et le rayonnement infrarouge présente à au moins une longueur d'onde un pic d'intensité bien défini, **caractérisé en ce que** l'échantillon liquide est traversé par un rayonnement infrarouge ayant une densité de lumière élevée dans le domaine infrarouge moyen à lointain, produit par au moins un laser à fréquence variable, dont la longueur d'onde est modifiée de manière contrôlée pendant la mesure.

2. Procédé selon la revendication 1, **caractérisé en ce que** l'on soumet l'analyte à mesurer à une modulation avant ou pendant la mesure, et on mesure la modification de l'absorption infrarouge entraînée par la modulation de l'analyte comme une fonction de la concentration de l'analyte à déterminer.

3. Procédé selon l'une des revendications 1 ou 2, **caractérisé en ce que**, lorsque l'on utilise plusieurs lasers, les valeurs moyennes des pics d'intensité respectifs du rayonnement infrarouge se différencient entre elles à chaque fois d'un nombre d'ondes d'environ 50.

4. Procédé selon la revendication 3, **caractérisé en ce que**, lorsque l'on prévoit plusieurs pics d'intensité bien définis dans un spectre d'émission d'un laser, ceux-ci se différencient à chaque fois d'un nombre d'onde d'environ 1 ou de 0,01 micromètre.

5. Procédé selon la revendication 4, **caractérisé en ce que** le ou les lasers est ou sont sous forme de lasers à cascade quantique.

6. Dispositif pour la détermination par transmission optique infrarouge de la concentration d'au moins un analyte dans un échantillon liquide, avec une cuve d'échantillon traversée par un écoulement du liquide échantillon, qui est disposée sur le trajet du rayonnement entre une source de rayonnement pour la production du rayonnement infrarouge et un détecteur pour la mesure de l'absorption infrarouge entraînée par l'analyte dans la cuve d'échantillon, **caractérisé en ce que** l'on prévoit comme source de rayonnement pour le rayonnement infrarouge au moins un laser à fréquence variable, le rayonnement produit une densité de lumière élevée dans le domaine infrarouge moyen à lointain, et ce rayonnement infrarouge présente à au moins une longueur d'onde un pic d'intensité bien défini.

7. Dispositif selon la revendication 6, **caractérisé en ce qu'**un dispositif de modulation est disposé en plus avant la cuve d'échantillon, ou la cuve d'échantillon comporte un dispositif de modulation dans lequel l'analyte peut être influencé d'une manière modifiant ses propriétés d'absorption.

8. Dispositif selon la revendication 6 ou 7, **caractérisé en ce qu'**au moins l'un des lasers est sous forme d'un laser à cascade quantique qui produit un rayonnement infrarouge avec au moins un pic d'intensité bien défini.

9. Dispositif selon la revendication 8, **caractérisé en ce que** le au moins un laser à cascade quantique produit un rayonnement infrarouge dont les pics d'intensité se différencient d'un nombre d'onde d'environ 1, ou de 0,01 micromètre.

10. Dispositif selon l'une des revendications 6 à 9, **caractérisé en ce que**, lorsque l'on utilise plusieurs lasers, les valeurs moyennes des pics d'intensité respectifs du rayonnement infrarouge se différencient entre elles d'un nombre d'onde d'environ 50.
